(19) Europäisches Patentamt
European Patent Office
Office européen des brevets

(11) **EP 4 722 610 A1**

(12) **EUROPEAN PATENT APPLICATION**

(43) Date of publication:
**08.04.2026  Bulletin 2026/15**

(21) Application number: **25206166.8**

(22) Date of filing: **01.10.2025**

(51) International Patent Classification (IPC):
**F24F 11/46** (2018.01)    **F24F 11/47** (2018.01)
**F24F 11/64** (2018.01)    **F24F 140/50** (2018.01)
**F24F 140/60** (2018.01)

(52) Cooperative Patent Classification (CPC):
**F24F 11/47; F24F 11/46;** F24F 11/64;
F24F 2140/50; F24F 2140/60; H02J 3/32

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **01.10.2024  US 202463701777 P**

(71) Applicant: **Viessmann Climate Solutions SE
35108 Allendorf (Eder) (DE)**

(72) Inventors:
• **Kessler, Michael**
**35108 Allendorf (Eder) (DE)**
• **Maul, Joachim**
**35108 Allendorf (Eder) (DE)**
• **Bonamigo, Mario**
**35108 Allendorf (Eder) (DE)**

(74) Representative: **Dehns
10 Old Bailey
London EC4M 7NG (GB)**

(54) **AIR CONDITIONING SYSTEM WITH ELECTRICAL AND THERMAL ENERGY STORAGE**

(57)     A method of operating an air conditioning system (100) includes predicting (1002) power consumption of the air conditioning system (100) during an upcoming demand period; measuring (1004) a storage state of an electrical energy storage device (240) and a storage state of a thermal buffer (802); determining if a combined electrical energy from the electrical energy storage device (240) and thermal energy from the thermal buffer (802) is sufficient to fulfill the predicted power consumption of the air conditioning system (100) for the upcoming demand period; in response to the combined electrical energy from the electrical energy storage device (240) and thermal energy from the thermal buffer (802) being insufficient to fulfill the predicted power consumption of the air conditioning system (100) for the upcoming demand period, starting (1010) a preloading phase; wherein the preloading phase includes at least one of (i) charging the electrical energy storage device (240) or (ii) heating or cooling the thermal buffer (802) using the air conditioning system (100).

FIG. 10

EP 4 722 610 A1

## Description

The embodiments described herein relate to air conditioning systems.

Electrical energy drives a myriad of devices and equipment in commercial, industrial, residential applications, and data centers. For example, electrical energy drives lights, motors, household appliances, medical equipment, computers, air conditioning systems, electric vehicle charging stations, data centers processing and cooling needs, and many other electrical devices. In most areas, power utilities generate and distribute electricity through an AC power grid. Shortages and/or increased costs associated with the use of fossil fuels, intermittency of renewable resources, power demand and supply variabilities, and increased demand of energy, among others factors, significantly impact the continuous availability and cost of electricity to consumers and businesses. In general, shortages and/or increased costs often occur during times of peak demand. Peak demand may occur based on time of day, such as in the morning or in the evening. On a more random basis, peak demand (or a demand greater than an available supply) may occur as a result of a natural disaster, or during extensive times of e.g., cloudiness, if the power from the grid comes from solar energy, or wind variability, if the power from the grid comes from wind turbines. For example, a hurricane or earthquake may damage the power grid and/or electric generators of the power utilities, thereby resulting in substantial loss of electric power to commercial, industrial, and residential applications. Repairs to these damaged lines and generators may take hours, days, or weeks. Various sites also may lose power from the power grid for other reasons, including maintenance. During these times of lost power, the sites may be unable to continue operations. Moreover, increasing numbers of data centers significantly add to the demand of energy from the grid.

Often, electrical energy from the power grid is more expensive during times of peak demand. For example, a power utility may employ low cost electrical generators during periods of minimum demand, while further employing high cost electrical generators during periods of peak demand. Unfortunately, the existing infrastructure does not adequately address these different costs associated with peak and minimum demands. As a result, commercial, industrial, data centers and residential applications typically draw power from the power grid during times of peak demand, despite the higher costs associated with its generation.

Some energy consumers, such as commercial, industrial, data centers, and residential users may be driven by factors other than cost, such as a desire to support sustainable energy options as further described below.

According to a first aspect of the invention there is provided a method of operating an air conditioning system including an electrical energy storage device and a thermal buffer, including predicting power consumption of the air conditioning system during an upcoming demand period; measuring a storage state of the electrical energy storage device and a storage state of the thermal buffer; determining if a combined electrical energy from the electrical energy storage device and thermal energy from the thermal buffer is sufficient to fulfill the predicted power consumption of the air conditioning system for the upcoming demand period; in response to the combined electrical energy from the electrical energy storage device and thermal energy from the thermal buffer being insufficient to fulfill the predicted power consumption of the air conditioning system for the upcoming demand period, starting a preloading phase; wherein the preloading phase includes at least one of (i) charging the electrical energy storage device or (ii) heating or cooling the thermal buffer using the air conditioning system.

Optionally, the thermal buffer comprises one or more buffer tanks storing a liquid.

Optionally, the thermal buffer comprises a building.

Optionally, the predicting the power consumption of the air conditioning system during the upcoming demand period includes predicting the power consumption in response to weather data.

Optionally, the weather data includes a predicted coefficient of performance of the air conditioning system.

Optionally, the weather data includes a weather model.

Optionally, the method further includes adjusting operation of the air conditioning system in response to house demand data.

Optionally, the method further includes adjusting operation of the air conditioning system in response to customer behavior data.

Optionally, the method further includes adjusting operation of the air conditioning system in response to utility data.

Optionally, the utility data includes price data that provides real-time and/or forecasted electricity pricing information.

Optionally, the utility data includes reward data that tracks and manages incentives offered by a utility provider for reducing energy consumption.

Optionally, the utility data includes balancing data that ensures that energy usage of the air conditioning system is balanced with available supply from an AC power grid.

Optionally, the preloading phase includes determining a selected preloading phase, in order to satisfy user comfort, reduce $CO_2$ emissions and/or reduces costs in response to coefficient of performance of the air conditioning system, current building temperature, ambient temperature, learned thermal performance of the building, occupancy and thermostat setpoint.

Optionally, the heating or cooling of the thermal buffer using the air conditioning system includes calculating a preload setpoint for the thermal buffer to meet a target temperature in a building conditioned by the air conditioning system at the end of a demand period.

According to a second aspect of the invention there is provided an air conditioning system which includes a first unit having a compressor and at least one fan; a second unit in fluidly coupled to the first unit; an electrical energy storage device; a thermal buffer; a controller in communication with the first unit, the controller configured to execute operations including: predicting power consumption of the air conditioning system during an upcoming demand period; measuring a storage state of the electrical energy storage device and a storage state of the thermal buffer; determining if a combined electrical energy from the electrical energy storage device and thermal energy from the thermal buffer is sufficient to fulfill the predicted power consumption of the air conditioning system for the upcoming demand period; in response to the combined electrical energy from the electrical energy storage device and thermal energy from the thermal buffer being insufficient to fulfill the predicted power consumption of the air conditioning system for the upcoming demand period, starting a preloading phase; wherein the preloading phase includes at least one of (i) charging the electrical energy storage device or (ii) heating or cooling the thermal buffer using the air conditioning system.

According to a third aspect of the invention there is provided a computer program which is embodied on a non-transitory computer-readable storage medium, the computer program including instructions for causing a processor to implement a process for operating an air conditioning system including an electrical energy storage device and a thermal buffer, the process including predicting power consumption of the air conditioning system during an upcoming demand period; measuring a storage state of the electrical energy storage device and a storage state of the thermal buffer; determining if a combined electrical energy from the electrical energy storage device and thermal energy from the thermal buffer is sufficient to fulfill the predicted power consumption of the air conditioning system for the upcoming demand period; in response to the combined electrical energy from the electrical energy storage device and thermal energy from the thermal buffer being insufficient to fulfill the predicted power consumption of the air conditioning system for the upcoming demand period, starting a preloading phase; wherein the preloading phase includes at least one of (i) charging the electrical energy storage device or (ii) heating or cooling the thermal buffer using the air conditioning system.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

The present invention is illustrated by way of example only and not limited in the accompanying figures in which like reference numerals indicate similar elements.

FIG. 1 depicts a system.

FIG. 2 depicts a controller.

FIG. 3A depicts an electrical architecture.

FIG. 3B depicts an electrical architecture.

FIG. 4A depicts an electrical architecture.

FIG. 4B depicts an electrical architecture.

FIG. 5A depicts an electrical architecture for a fixed speed compressor having a DC architecture.

FIG. 5B depicts an electrical architecture for a fixed speed compressor having an AC architecture.

FIG. 5C depicts an electrical architecture for a variable speed compressor having a DC architecture.

FIG. 5D depicts an electrical architecture for a variable speed compressor having an AC architecture.

FIG. 6 depicts an electrical architecture for a compressor powered by a multilevel inverter.

FIG. 7 depicts one phase leg of a five level, multiphase inverter.

FIG. 8 depicts communication between a controller, a thermostat and a remote system.

FIG. 9 depicts a control process.

FIG. 10 depicts a system architecture.

FIG. 11 depicts a control process.

With current global electrification and decarbonization efforts, there are incentives to use efficient, optimized, all-electric air conditioning systems that provide comfort while being dispatchable (on-off, adjusted or variable) under different pricing conditions, or after receiving a utility signal. By way of example, the utility signal may be received from an electrical AC power grid, and may include an independent system operator (ISO), which may include an independent, federally regulated entity established to coordinate regional transmission in a non-discriminatory manner and ensure the safety and reliability of the electric system, or a regional transmission organization (RTO) which may operate bulk electric power systems across much of a geographic area and are generally independent, membership-based, non-profit organizations that ensure reliability and optimize supply and demand bids for wholesale electric power, or from a virtual power plant, generally considered to include a connected aggregation of distributed energy resource (DER) technologies providing integration of renewables and demand flexibility. Reference to a utility refers to one or more entities involved in the generation, transmission and/or distribution of electrical power.

Embodiments described herein relate to an air conditioning system that includes electrical energy storage systems (e.g., batteries, supercapacitors) to provide a level of dispatchability needed to interconnect with the electrical power grid.

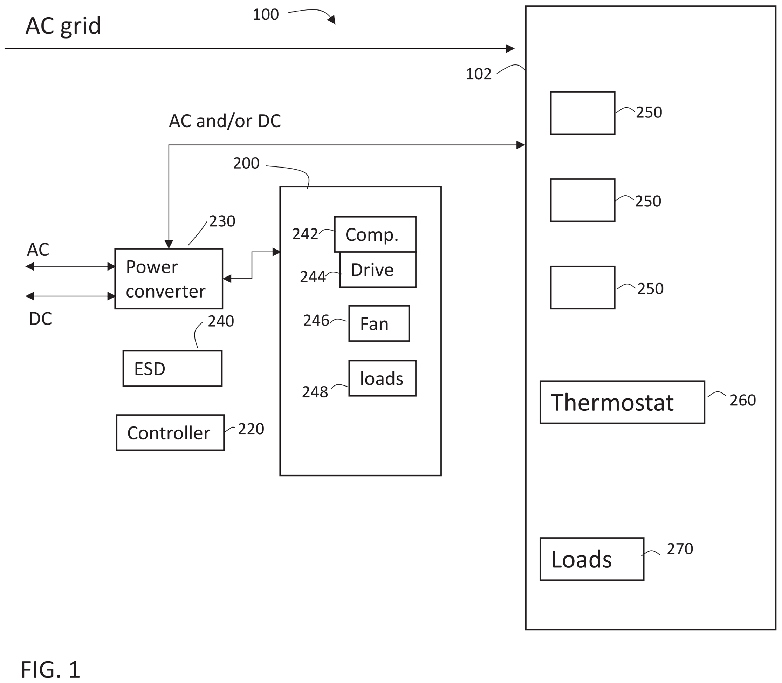

FIG. 1 depicts a system 100 in an example embodiment. The system 100 includes components of an air conditioning system. The phrase "air conditioning" is intended to include one or more of heating, cooling, ventilation, humidification, dehumidification, refrigeration, hot water heating, chilling water or fluid, air filtration, and other known air processing operations, or a combination of any of the above. The air conditioning system may include known types of systems such as heat pumps, geothermal heat pumps, chillers, split systems, packaged systems, all-in-one systems, etc. The air conditioning system 100 includes a first unit 200 and one or more second units 250. Depending on the nature of the air conditioning system, the first unit 200 and the second unit(s) 250 may be separately located (indoors or outdoors) or co-located (indoors or outdoors). For example, in a split system, the first unit 200 is an outdoor unit (e.g., compressor and heat exchanger) and the second unit(s) 250 are indoor units (e.g., expansion mechanisms, heat exchangers). In a packaged system (e.g., rooftop or ground), the first unit 200 and the second unit 250 are co-located in a single footprint outside a building. In a chiller, the first unit 200 and the second unit 250 may be co-located (both indoor or outdoor) or separately located. Certain all-in-one systems may have the first unit 200 and the second unit 250 co-located inside a building.

In the example shown in FIG. 1, the first unit 200 may be an outdoor unit of a split system located on ground level next to a building 102, on a rooftop of the building 102 or any other location. The second unit(s) 250 may be located inside the building 102, as is common with split systems. It is understood that FIG. 1 is one example, and embodiments are not limited to split systems.

The system 100 includes a controller 220, a power converter 230 and an energy storage device (ESD) 240. FIG. 1 is an example embodiment, and the location of components is not limited to that shown in FIG. 1. For example, the power converter 230, energy storage device 240 and controller 220 may be separate from the first unit 200, which houses the compressor 242, drive 244, fan 246 and load(s) 248. The first unit 200 may include a control unit (not shown) for controlling operation of the first unit 200. This allows components of the described embodiments to be retrofit to existing first units 200 of air conditioning systems and/or second units 250 of air conditioning systems. One or more of the power converter 230, energy storage device 240 and controller 220 may be located in the first unit 200. One or more of the power converter 230, energy storage device 240 and controller 220 may be located adjacent to or outside the first unit 200. One or more of the power converter 230, energy storage device 240 and controller 220 may be located in building 102.

The first unit 200 may include a heat exchanger (not shown) that will serve as a condenser/gas cooler and/or as an evaporator, as part of a vapor compression refrigeration cycle.

In the FIGURES, the locations of all components in the drawings are examples, and embodiments include modification of the locations of components shown in the drawings. For example, components illustrated as connected to the first unit 200, may be retrofit components added to an existing first unit 200. Although shown as separate boxes, elements may be joined into sub-assemblies and assemblies, anywhere in the system, indoor or outdoor, without departing from embodiments of the invention.

The controller 220 may communicate with an air conditioning controller system controller and/or an energy storage device controller. In some embodiments, a single controller may implement all the functions of the controller 220, air conditioning controller and energy storage device controller. The controller 220 communicates with components of the described systems using wired and/or wireless connections, which are not illustrated in the drawings.

The system of FIG. 1, and embodiments thereof described herein, allow for one or more components of the air conditioning system, and other loads not associated with the air conditioning system, to be powered solely by an AC power grid, powered solely by the energy storage device 240, and powered by both the AC power grid and the energy storage device 240, in conjunction. The one or more components of the air conditioning system include components in the first unit 200, components in the second unit 250.

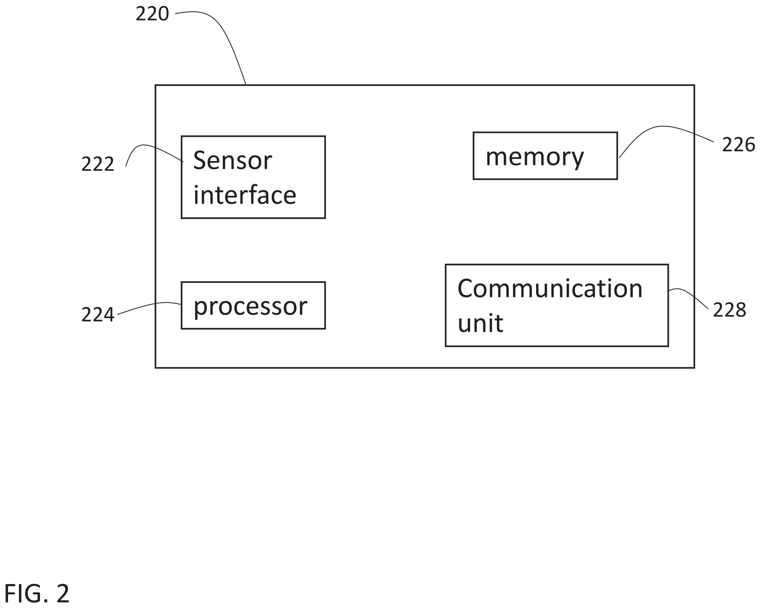

FIG. 2 depicts the controller 220 in accordance with an embodiment. The controller 220 includes a sensor interface 222 that can obtain operational parameters of the air conditioning system, such as pressures, temperatures, etc. As known in the art, the controller 220 can adjust operation of the air conditioning system based on sensed operational parameters. The controller 220 includes a processor 224 that controls operation of the system 100. The processor 224 may be implemented using a general-purpose microprocessor executing a computer program stored on a storage medium to perform the operations described herein. Alternatively, the processor 224 may be implemented in hardware (e.g., ASIC, FPGA) or in a combination of hardware/software. The processor 224 allows the controller 220 to perform computations locally, also referred to as edge computing. The processor 224 can send commands to other components of the air conditioning system 100 based on a result of the local computations.

The controller 220 includes a memory 226 that may store a computer program executable by the processor 224, reference data, sensor data, etc. The memory 226 may be implemented using known devices, such as random access memory. The controller 220 includes a communication unit 228 which allows the controller 220 to communicate with other components of the system 100, such as first unit 200, second units 250 and a thermostat 260. The communication unit 228 may be implemented using wired connections (e.g., LAN, ethernet, twisted pair, etc.) and/or wireless connections (e.g., Wi-Fi, near field communications ("NFC"), Bluetooth, etc.).

In some embodiments, communication unit 228 may provide high-speed data communications over existing wiring systems and/or communication with newer equipment having a high-speed bus, while maintaining communications with existing equipment (e.g., having RS-485 communications bus). In some embodiments, an HVAC equipment may include 4 wires used for data communications, Power, Ground, Data+, and Data-. Of these lines, Data+ and Data- are used to carry the low-speed, standard RS-485 data. The power line is used to power the wall control and comes from a second unit 250. This same power line is carried to the first unit 200 although it is generally not used. The ability to take advantage of the power and ground lines of the 4-wire system (referred to as "Power Line Communications" (PLC) technology) allows digital/data signals to be sent over power lines. In some embodiments, PLC technology may allow for data transmission at or near gigabit speed rates using standard 2-conductor wiring. This includes the 2 wires represented by Power and Ground of the HVAC equipment. It should be appreciated that other data transmission speeds may be possible. In some embodiments, the communication unit 228 of the present invention may be configured such that, while the PLC high-speed communication is occurring over the Power and Ground line of the 4-wire system, the low-speed RS-485 communication can also be occurring on the Data+ and Data- lines. In some embodiments, the ability to use high speed communications or a combination of high speed and low speed communications enable the controller 220 to utilize machine-learning (ML) based or artificial intelligence (AI) based, algorithms. In some embodiments, the high speed and low speed communications may occur approximately simultaneously (e.g., within milliseconds of one another). This may allow the standard HVAC wire to communicate with both RS-485 controlled equipment as well as HVAC equipment which contains the additional PLC transceivers. This may be advantageous because both new high-speed HVAC equipment and existing RS-485 HVAC equipment can co-exist on existing wiring of the building.

Referring to FIG. 1, the power converter 230 is used to perform any necessary power conversions including one or more of AC-AC, AC-DC, DC-AC and DC-DC. The power converter 230 may include several power converters at different locations in the system 100. The power converter(s) 230 may operate in a bi-directional manner so that one or more power conversions are bi-directional. As shown in FIG. 1, the power converter 230 is connected to AC and/or DC power sources and/or loads. The power converter 230 may also provide power to loads in the building 102, including the second units 250 (if in the building 102), the thermostat 260 and loads 270. In conventional modes, the loads in building 102 will receive AC power from the AC power grid directly. The controller 220 may choose whether the power will come from the AC power grid or from the power converter 230. Example embodiments of the power converter 230 are described herein.

The energy storage device 240 is configured to provide, under certain circumstances, at least a portion of the power to operate one or more of components of the air conditioning system, such as the first unit 200, the second unit(s) 250, along with the indoor load(s) 270, and any other loads. The energy storage device 240 may be implemented using apparatus for storing electrical energy including one or more of, for example, a battery, battery modules, battery cells, supercapacitor, etc. The battery 240 may include several cells in either modular form or as a stand-alone, multi-cell array. The battery 240 may be made of a single or multiple packaged self-contained systems, battery modules or individual cells. The battery 240, such as a complete plug and play battery, may include a box, wires, cells, and modules. For example, the battery 240 may include a group of cells configured into a self-contained mechanical and electrical unit. The energy storage device 240 may include other components (e.g., an ESD management system (ESDMS)) that are electrically coupled to the energy storage device 240 and may be adapted to communicate directly or through the ESDMS to controller 220.

The first unit 200 also includes components used as part of the air conditioning system, and includes a compressor 242, one or more drives 244, a fan 246, and other loads 248, and a control unit (not shown). A heat exchanger (not shown) in the first unit 200 may act as evaporator or condenser/gas cooler. These components are described in further detail herein when relevant to embodiments.

In a split system, inside the building 102, one or more second units 250 are positioned to condition one or more zones of the building 102. The second units 250 may be employed using a variety of known second units, including variable air volume (VAV) units, liquid cooled second units, fan coil units, furnaces, air handler (s), etc., which usually include heat exchangers. In other types of systems (e.g., packaged or chillers) the second unit(s) 250 may be located outdoors and include any form of heat exchangers such as cooling towers, etc.

An optional thermostat 260 provides a user interface for the air conditioning system 100, and allows the user to enter operational modes of the air conditioning system 100, enter setpoints for various zones of the system 100, etc. The indoor loads 270 may be supplied electrical power by the first unit 200. The indoor loads 270 include a wide variety of loads, such as appliances, lighting, electric vehicle chargers, etc. A thermostat 260 is not required and other techniques may be used for control of the air conditioning system.

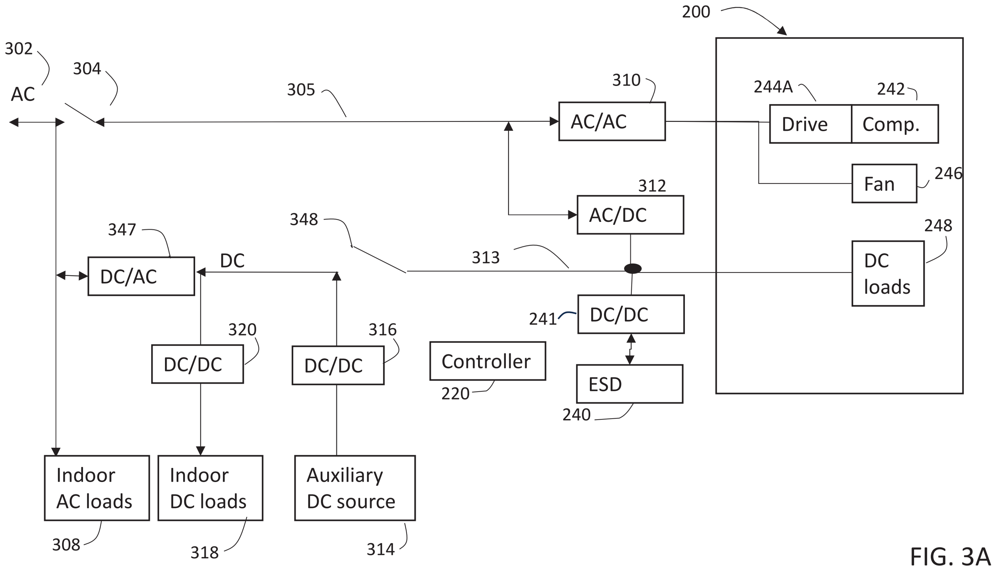

FIG. 3A depicts an electrical architecture in an example embodiment. The location of components in FIG. 3A is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into subassemblies and assemblies, anywhere in the system, indoor or outdoor, without departing from embodiments of the invention.

As shown in FIG. 3A, an AC power grid 302 is connected to the first unit 200 through a grid disconnect 304, which is under control of the controller 220. This allows the first unit 200 to be powered by the energy storage device 240, independent of the AC power grid 302. The first unit 200 may also be powered by both the AC power grid 302 and the energy storage device 240 in conjunctions. The disconnect 304 may also be implemented as a mechanical switch controlled, for example by controller 220 or in software by the controller 220 by controlling one or more power converters.

The AC power grid 302 is connected to indoor AC loads 308 (such as an air handler, or any fixture in residential, commercial, industrial buildings or data centers). The AC power grid 302 is also provided to an AC/AC converter 310 which supplies conditioned AC power to a compressor drive 244A of the compressor 242 and the fan 246. The AC/AC converter 310 may control the amplitude, frequency, phase, etc. of AC power provided to the compressor drive 244A of the compressor 242 and the fan 246.

The AC power grid 302 may also be connected to one of a unidirectional or a bi-directional AC/DC converter 312 which interfaces the AC power bus 305 with a DC power bus 313. The DC power bus 313 supplies power to the DC loads 248, which may be located in the first unit 200. Under certain conditions, the DC power bus 313 supplies power to the one or more of components of the air conditioning system (e.g., compressor 242 and fan 246) through the bi-directional AC/DC converter 312 and the AC/AC converter 310. This allows the one or more of components of the air conditioning system to operate independent of, or in conjunction with, the AC power grid 302. The bi-directional AC/DC converter 312 also allows power from the DC bus 313 to be directed to the AC power grid 302.

The DC power bus 313 may be powered by the energy storage device 240. In charging mode, the DC power bus 313 is used to charge the energy storage device 240 (charger not shown). The DC power bus 313 may also be powered by one or more auxiliary DC sources 314, such as solar DC power, wind DC power, geothermal DC power, fuel cells, etc. A DC/DC converter 316 may be used to couple the auxiliary DC sources 314 to the DC power bus 313. The DC power bus 313 may provide power to indoor DC loads 318. A DC/DC converter 320 may be used to couple the indoor DC loads 318 to the DC power bus 313. An DC/AC converter 347 may be used to couple the DC power bus 313 to indoor AC loads 308 through a disconnect 348. In some operating modes, the energy storage device 240 is used to power indoor AC loads 308. The AC/AC converter 310, the AC/DC converter 312, the DC/DC converter 320, the DC/DC converter 316 and the DC/AC converter 347 may be implementations of the power converter 230 in FIG. 1. In some embodiments, the one or more auxiliary DC sources 314 are connected to the AC power bus 305 through a DC/AC converter (not shown). In other embodiments, the one or more auxiliary power sources provide AC power, which is connected to the AC bus 305 and/or the DC bus 313 through an appropriate AC/AC converter or AC/DC converter.

The compressor drive 244A may be implemented in a variety of manners. In one embodiment, the compressor drive 244A is a switch, such as a contactor or relay, that connects the compressor 242 to the output of the AC/AC converter 310. In other embodiments, the compressor drive 244A may be a power converter, such as an AC/AC converter or an AC/DC converter.

An optional DC/DC converter 241 may provide power conversion between the energy storage device 240 and the DC power bus 313. The DC/DC converter 241 may be a bi-directional converter used to step up or step down a DC voltage so that the energy storage device 240 can power the DC power bus 313 and the DC power bus 313 can charge the energy storage device 240. The DC/DC converter 241 may be part of the energy storage device 240 or may be a separate component from the energy storage device 240.

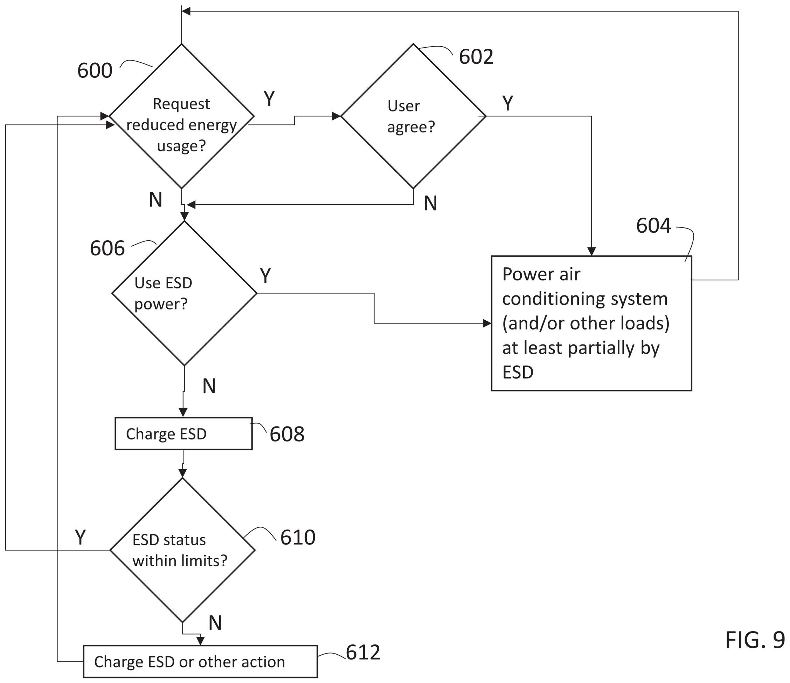

The electrical architecture of FIG. 3A allows one or more components of the air conditioning system (first unit 200 and/or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and/or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

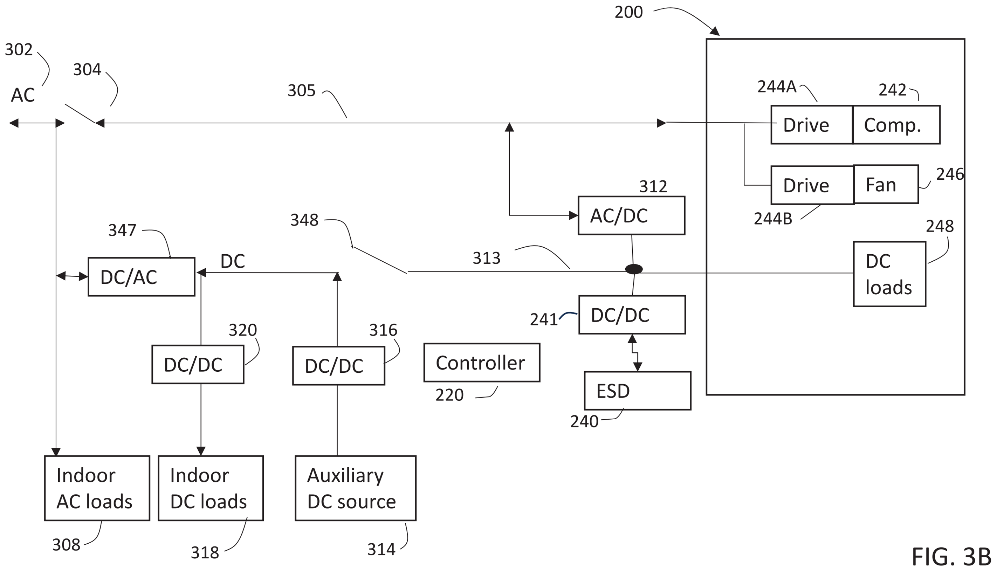

FIG. 3B depicts an electrical architecture in an example embodiment. The location of components in FIG. 3B is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the invention.

FIG. 3B is similar to FIG. 3A, with the exception that the AC/AC converter 310 is eliminated. The compressor 242 is provided power from a compressor drive 244A. The compressor drive 244A may be a switch, such as a contactor or relay, that connects the compressor 242 to the AC power bus 305. In other embodiments, the compressor drive 244A may be a power converter, such as an AC/AC converter or an AC/DC converter. The compressor drive 244A may be controlled by the controller 220.

The fan 246 is provided power from a fan drive 244B. The fan drive 244B may be a switch, such as a contactor or relay, that connects the fan 246 to the AC power bus 305. In other embodiments, the fan drive 244B may be a power converter, such as an AC/AC converter or an AC/DC converter. The fan drive 244B may be controlled by the controller 220.

The electrical architecture of FIG. 3B allows one or more components of the air conditioning system (first unit 200 and/or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and/or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

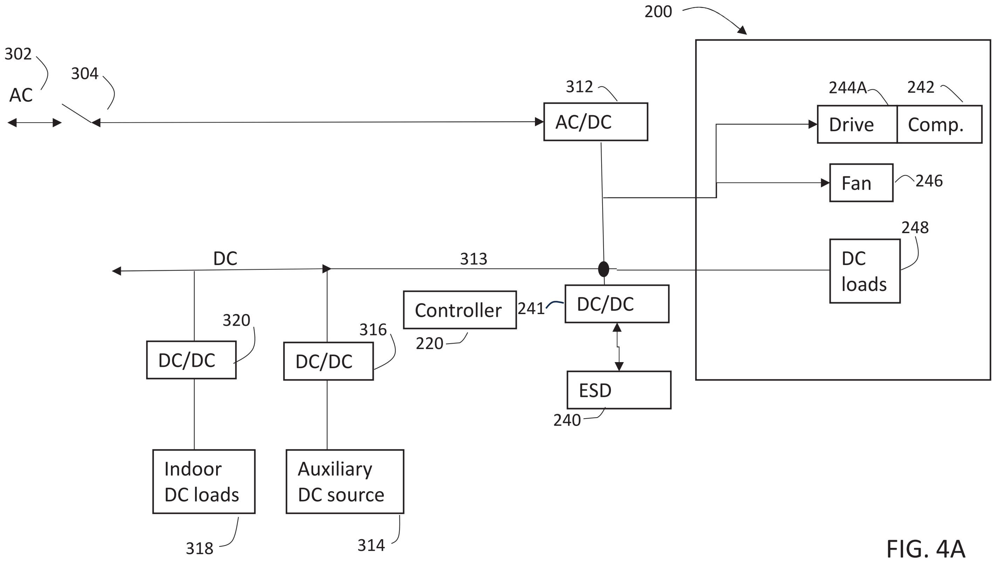

FIG. 4A depicts an electrical architecture in another example embodiment. The location of components in FIG. 4A is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the invention.

In FIG. 4A, the compressor drive 244A and the fan 246 are DC powered, and as such, there is no need for the AC/AC converter 310. The bi-directional AC/DC converter 312 allows the energy storage device 240 to supply power to one or more components of the air conditioning system and/or feed power from the DC bus 313 to the AC power grid 302, under certain conditions. The bi-directional AC/DC converter 312 interfaces the AC power bus 305 with a DC power bus 313.

The compressor drive 244A may be a switch, such as a contactor or relay, that connects the compressor 242 to the DC power bus 313. In other embodiments, the compressor drive 244A may be a power converter, such as a DC/AC converter or a DC/DC converter. The compressor drive 244A may be controlled by the controller 220.

The electrical architecture of FIG. 4A allows one or more components of the air conditioning system (first unit 200 and/or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and/or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

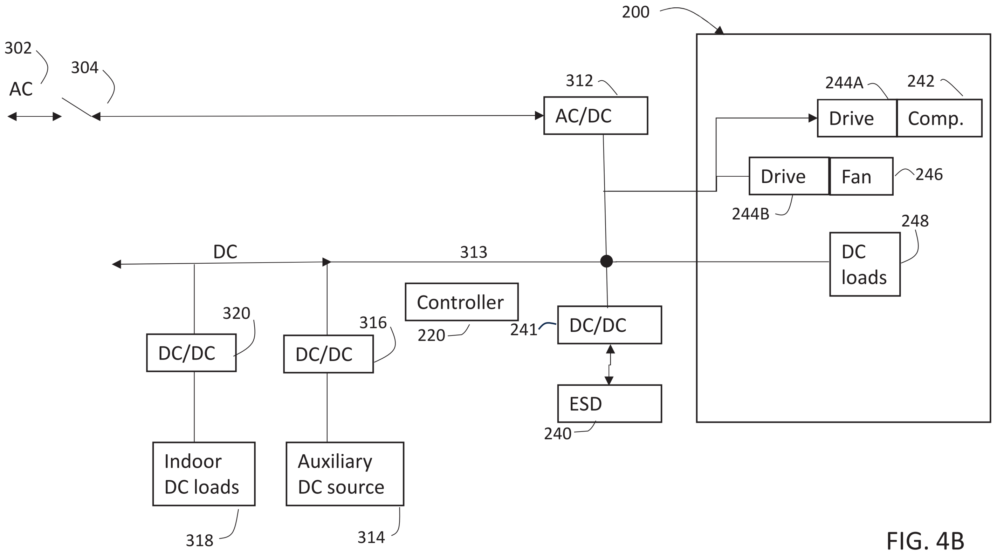

FIG. 4B depicts an electrical architecture in another example embodiment. The location of components in FIG. 4B is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the invention.

FIG. 4B is similar to FIG. 4A, with the exception that the fan 246 includes a fan drive 244B. The fan drive 244B may be a switch, such as a contactor or relay, that connects the fan 246 to the DC power bus 313. In other embodiments, the fan drive 244B may be a power converter, such as a DC/AC converter or a DC/DC converter. The fan drive 244B may be controlled by the controller 220.

The electrical architecture of FIG. 4B allows one or more components of the air conditioning system (first unit 200 and/or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and/or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

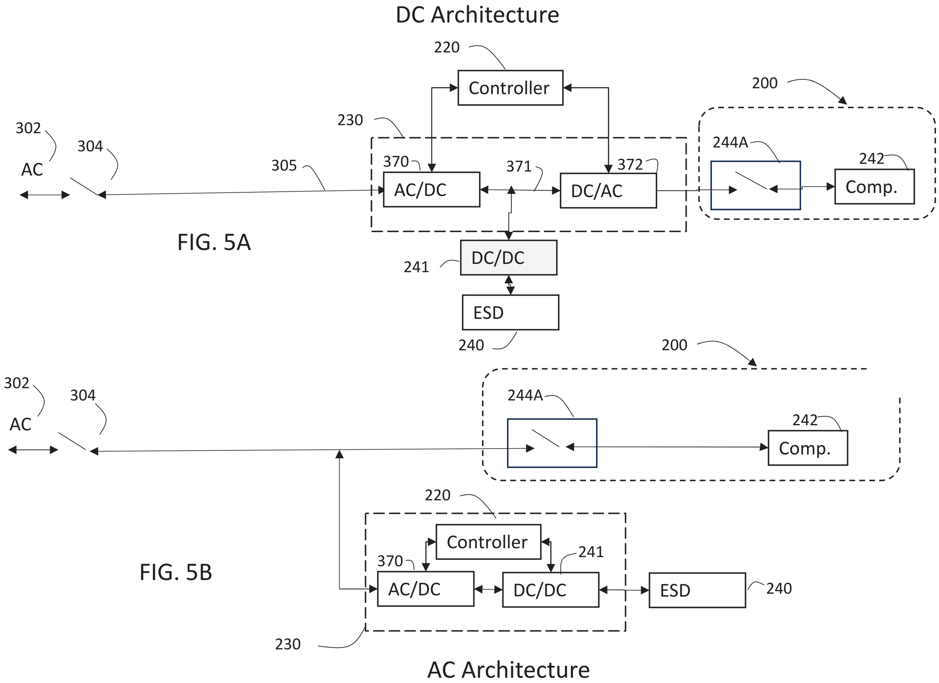

FIG. 5A depicts a DC electrical architecture for a fixed speed first unit 200 in an example embodiment. The location of components in FIG. 5A is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the invention.

Not all components of the first unit 200 are shown for ease of illustration and explanation. The power converter 230 may be used in conjunction with the embodiments described above, or other embodiments. For example, one or more auxiliary DC sources 314 may be connected to the energy storage device 240 (via a DC bus) to supplement power from the energy storage device 240. As shown in Figure 5A, AC power from the AC power grid 302 is supplied through the grid disconnect 304 to a power converter 230. The power converter 230 includes an AC/DC converter 370 and a DC/AC converter 372. The output of the DC/AC converter 372 is provided to the compressor 242, through a compressor drive 244A. As the compressor 242 is fixed speed, the compressor drive 244A may be a switch, such as a contactor or relay.

Both the AC/DC converter 370 and the DC/AC converter 372 operate under the control of the controller 220. Between the AC/DC converter 370 and the DC/AC converter 372 is a DC link 371 that is connected to the energy storage device 240, optionally through the DC/DC converter 241. Under this arrangement, energy storage device 240 may be charged by the power converter 230. Alternatively, the energy storage device 240 may provide DC power to the DC link 371 to power the DC/AC converter 372 and the compressor 242. This allows the first unit 200 to operate independent of, or in conjunction with, the AC power grid 302. The AC/DC converter 370 may be bi-directional to allow the energy storage device 240 to provide power to, and be charged from, the AC power grid 302.

The controller 220, the power converter 230, the energy storage device 240, DC\DC converters 320 and 316, and DC/AC converter 347, and the DC/DC converter 241 may be retrofit to an existing first unit 200. This allows the energy storage device 240 to be added to existing air conditioning systems to enable the first unit 200 to operate independent of the AC power grid 302 or operate under power from both the AC power grid 302 and the energy storage device 240. It allows also for auxiliary power sources to be added in a modular way.

The electrical architecture of FIG. 5A allows one or more components of the air conditioning system (first unit 200 and/or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and/or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

FIG. 5B depicts an AC electrical architecture for a fixed speed first unit 200 in an example embodiment. The location of components in FIG. 5B is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the invention.

Not all components of the first unit 200 are shown for ease of illustration and explanation. The power converter 230 may be used in conjunction with the embodiments described above, or other embodiments. For example, one or more auxiliary DC sources 314 may be connected to the energy storage device 240 (via a DC bus) to supplement power from the energy storage device 240.

In FIG. 5B, the power converter 230 includes a DC/DC converter 241 coupled to the energy storage device 240 and an AC/DC converter 370. The AC/DC converter 370 may be bi-directional to allow the energy storage device 240 to provide power to, and be charged from, the AC power grid 302. As the compressor 242 is fixed speed, the compressor drive 244A may be a switch, such as a contactor or relay.

The controller 220, the power converter 230, the energy storage device 240 may be retrofit to an existing first unit 200. This allows the energy storage device 240 to be added to existing air conditioning systems to enable the first unit 200 to operate independent of the AC power grid 302 or operate under power from both the AC power grid 302 and the energy storage device 240.

The electrical architecture of FIG. 5B allows one or more components of the air conditioning system (first unit 200 and/or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and/or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

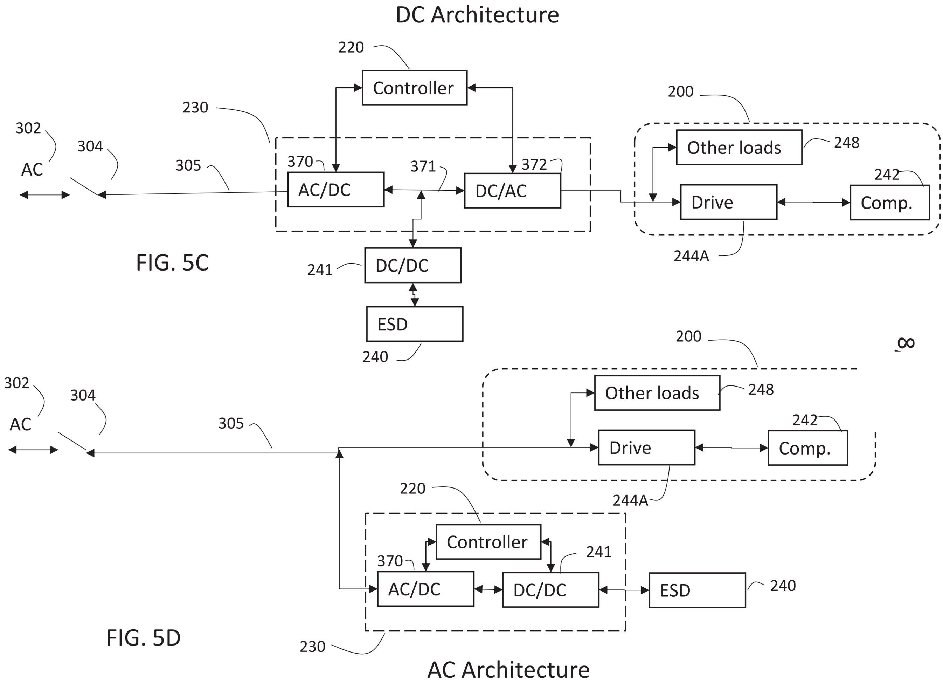

FIG. 5C depicts a DC electrical architecture for a variable speed first unit 200 in an example embodiment. The location of components in FIG. 5C is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the invention.

FIG. 5C is similar to FIG. 5A, with the exception that the compressor drive 244A provides for variable speed operation of the compressor 242. Other loads 248 of the first unit 200 may be powered from the output of the DC/AC converter 372.

The controller 220, the power converter 230, the energy storage device 240 and the DC/DC converter 241 may be retrofit to an existing first unit 200. This allows the energy storage device 240 to be added to existing air conditioning systems to enable the first unit 200 to operate independent of the AC power grid 302 or operate under power from both the AC power grid 302 and the energy storage device 240.

Not all components of the first unit 200 are shown for ease of illustration and explanation. The power converter 230 may be used in conjunction with the embodiments described above, or other embodiments. For example, one or more auxiliary DC sources 314 may be connected to the energy storage device 240 (via a DC bus) to supplement power from the energy storage device 240.

The electrical architecture of FIG. 5C allows one or more components of the air conditioning system (first unit 200 and/or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and/or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

FIG. 5D depicts an AC electrical architecture for a variable speed first unit 200 in an example embodiment. The location of components in FIG. 5D is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the invention.

FIG. 5D is similar to FIG. 5B, with the exception that the compressor drive 244A provides for variable speed operation of the compressor 242. Other loads 248 of the first unit 200 may be powered from the AC power bus 305.

Not all components of the first unit 200 are shown for ease of illustration and explanation. The power converter 230 may be used in conjunction with the embodiments described above, or other embodiments. For example, one or more auxiliary DC sources 314 may be connected to the energy storage device 240 (via a DC bus) to supplement power from the energy storage device 240.

The controller 220, the power converter 230 and the energy storage device 240 may be retrofit to an existing first unit 200. This allows the energy storage device 240 to be added to existing air conditioning systems to enable the first unit 200 to operate independent of the AC power grid 302 or operate under power from both the AC power grid and the energy storage device 240.

The electrical architecture of FIG. 5D allows one or more components of the air conditioning system (first unit 200 and/or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and/or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

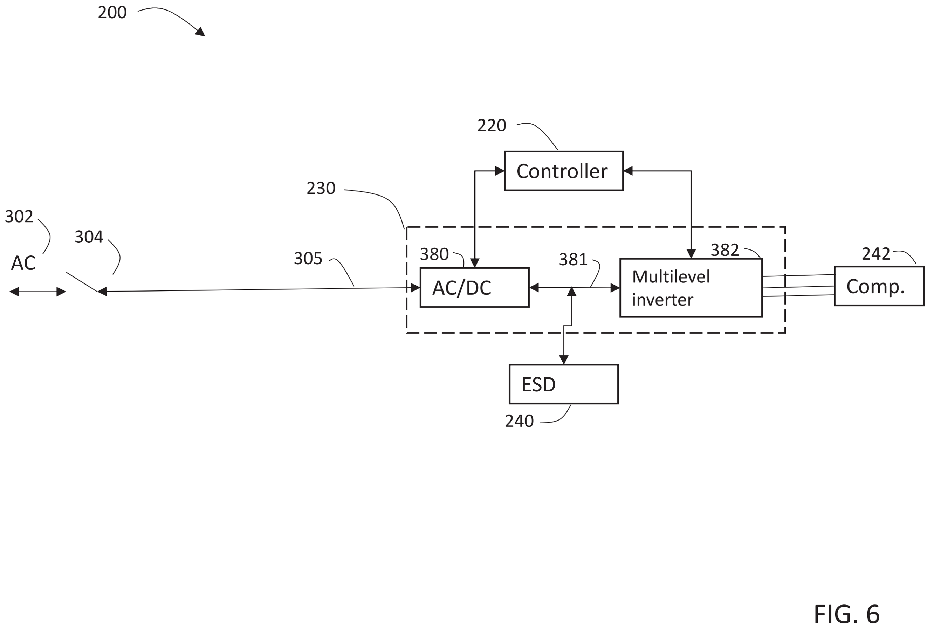

FIG. 6 depicts an electrical architecture having a variable speed compressor drive including a multilevel inverter in an example embodiment. Not all components of the first unit 200 are shown for ease of illustration and explanation. The location of components in FIG. 6 is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the invention.

As shown in FIG. 6, AC power from the AC power grid 302 is supplied through the grid disconnect 304 to power converter 230. The power converter 230 includes an AC/DC converter 380 and a multilevel inverter 382. The output of the multilevel inverter 382 is provided to the compressor 242. The output of the multilevel inverter 382 may be a multi-phase, multi-level waveform configured to drive a multi-phase motor of the compressor 242. In an example embodiment, the multilevel inverter 382 is a five-level, three phase inverter. In another example embodiment, the multilevel inverter 382 is a three-level, three phase inverter.

The multilevel inverter 382 synthesizes a sinusoidal current waveform to run and control the compressor 242. This is done traditionally by a two-level inverter. Integration with the energy storage device 240 allows for a natural progression to higher order inverters. Three and five level inverters require independent power supplies to set the voltage levels. In the embodiment of FIG. 6, the energy storage device 240 can set the voltage levels. The energy storage device 240 may include internal battery modules connected in series. The multilevel inverter 382 directly uses the battery modules for each requisite voltage level thereby enabling the benefits of a multilevel inverter. The multilevel inverter 382 benefits from lower harmonic output and lower dv/dt device stresses. The multilevel inverter 382 increases reliability through the ability to reconfigure to a lower number of levels after a fault has occurred, through the integration of back-to-back switches or relays, connecting or disconnecting battery modules together.

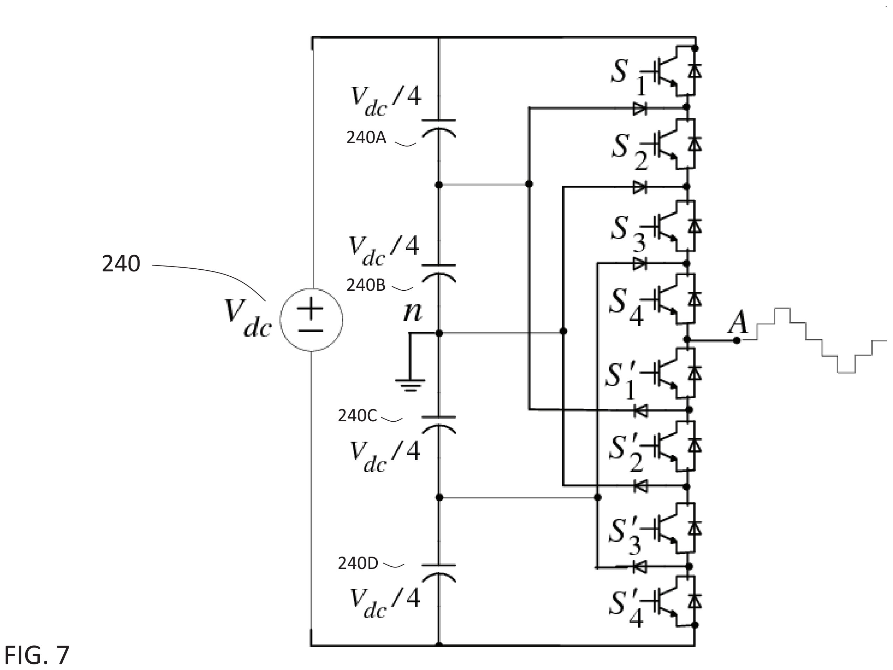

FIG. 7 shows one phase leg of a five level, multiphase inverter in an embodiment of the multilevel inverter 382. The energy storage device 240 includes at least four battery modules 240A, 240B, 240C and 240D, connected in series. The combination of the battery modules 240A, 240B, 240C and 240D, and a neutral point, n, provides the five voltage levels used to create a sinusoidal output waveform on one phase. In general, using N battery module voltages provides for an N+1 level output waveform for each phase. Switches S1-S4 and S1'-S4' are controlled by the controller 220 to produce a sine wave as known in the art. The multilevel inverter 382 can be reconfigured to fewer levels through the integration of back-to-back switches or relays, connecting or disconnecting battery modules together.

The voltage levels used in the multilevel inverter 382 do not need to be supplied by separate battery modules. The voltage levels used to create the sinusoidal output waveform can be created using one battery module, with the battery voltage being split, for example, by capacitors.

Referring the FIG. 6, both the AC/DC converter 380 and the multilevel inverter 382 operate under the control of the controller 220. Between the AC/DC converter 380 and the multilevel inverter 382 is a DC link 381 that is connected to the energy storage device 240. Under this arrangement, energy storage device 240 may be charged by the power converter 230. Alternatively, the energy storage device 240 may provide DC power to the DC link 381 to power the multilevel inverter 382 and compressor 242. This allows the first unit 200 to operate independent of the AC power grid 302 or operate under power from both the AC power grid 302 and the energy storage device 240. The AC/DC converter 380 may be bi-directional to allow the energy storage device 240 to provide power to, and be charged from, the AC power grid.

The electrical architecture of FIG. 6 allows one or more components of the air conditioning system (first unit 200 and/or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and/or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

In the above embodiments, one or more auxiliary DC sources 314 may be used to provide DC power. The one or more auxiliary DC sources 314, may include sources such as solar DC power, wind DC power, geothermal DC power, fuel cells, etc.

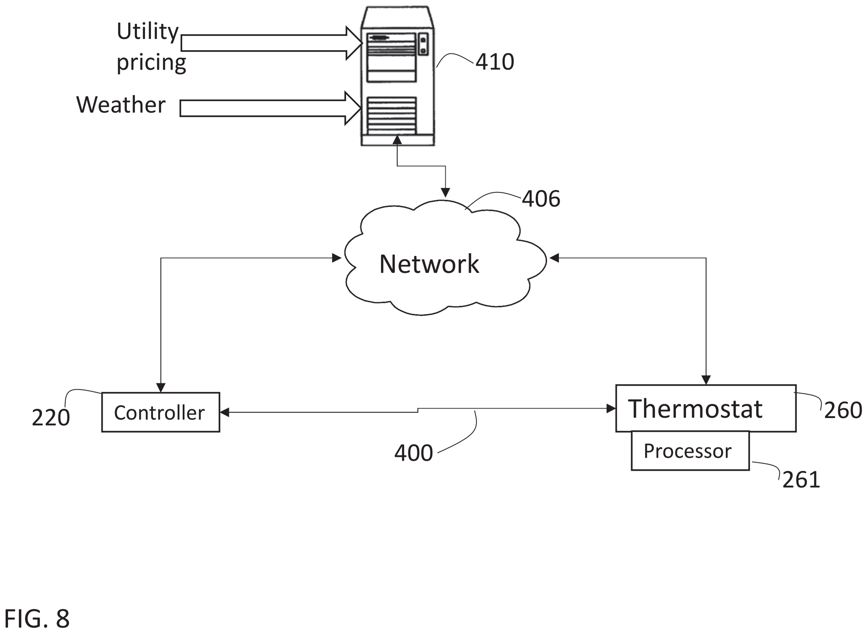

FIG. 8 depicts communication between the controller 220, the thermostat 260 and a remote system 410 in an example embodiment. As noted above, the controller 220 may be integrated as part of an air conditioning controller and/or a battery controller, or be independent and communicating to the air conditioning controller and/or energy storage controller. The controller 220 communicates with the thermostat 260 over a local link 400. The local link 400 may be a wired connection (e.g., twisted pair, four wire, power line communication, Modbus, CAN bus, etc.) and/or a wireless connection (e.g., WiFi, radio or Bluetooth, NFC, etc.). The thermostat 260 may also be implemented using a software application operating on a user device (e.g., mobile phone, tablet, laptop). The thermostat 260 may also provide occupancy, past performance, and weather information to the controller 220.

One or both of the controller 220 and the thermostat 260 may be in communication with a remote system 410 over a network 406. The network 406 may be a long range network and may be implemented by a variety of communication protocols. The network 406 may be implemented via one or more networks, such as, but are not limited to, one or more of WiMax, a Local Area Network (LAN), Wireless Local Area Network (WLAN), a Personal area network (PAN), a Campus area network (CAN), a Metropolitan area network (MAN), a Wide area network (WAN), a Wireless wide area network (WWAN), or any broadband network, and further enabled with technologies such as, by way of example, Global System for Mobile Communications (GSM), Personal Communications Service (PCS), Bluetooth, Wi-Fi, Matter, Fixed Wireless Data, 2G, 2.5G, 3G (e.g., WCDMA/UMTS based 3G networks), 4G, IMT-Advanced, pre-4G, LTE Advanced, 5G, 6G, mobile WiMax, WiMax 2, WirelessMAN-Advanced networks, enhanced data rates for GSM evolution (EDGE), General packet radio service (GPRS), enhanced GPRS, iBurst, UMTS, HSPDA, HSUPA, HSPA, HSPA+, UMTS-TDD, 1xRTT, EV-DO, messaging protocols such as, TCP/IP, SMS, MMS, extensible messaging and presence protocol (XMPP), real time messaging protocol (RTMP), instant messaging and presence protocol (IMPP), instant messaging, USSD, IRC, or any other wireless data networks, broadband networks, or messaging protocols.

The remote system 410 may be embodied as any type of processor-based computation or computer device capable of performing the functions described herein, including, without limitation, a computer, a server, a workstation, a desktop computer, a laptop computer, a notebook computer, a tablet computer, a mobile computing device, a wearable computing device, a network appliance, a web appliance, a distributed computing system (e.g., cloud computing), a processor-based system, and/or a consumer electronic device. The remote system 410 provides information that is used by the controller 220 and/or thermostat 260 to implement an energy management routine that controls how power is consumed by the one or more components of the air conditioning system and the loads 270. The information provided by the remote system 410 may include utility pricing, indicating the cost of electricity on the AC power grid 302 and weather information, which may be used to predict future utility pricing and usage of the one or more components of the air conditioning system. The utility pricing and weather may be pushed to, or pulled by, the remote system 410 using known networking techniques. The utility pricing and/or weather may be determined in real time or be forecasts of future conditions.

In the above-described embodiments, the controller 220 communicates with components of the described systems using wired and/or wireless connections, which are not illustrated in the drawings. Depending on the power sources used in an operation mode (e.g., one or more of AC grid power, energy storage device power, auxiliary power sources, etc.) the controller 220 sends command signals to the various system components, (for example, AC/AC converter 310, AC/DC converter 312, DC/AC converter 347, DC/DC converter 320, DC/DC converter 316, DC/DC converter 241, AC/DC converter 370, DC/AC converter 372, AC/DC converter 380 and/or multilevel inverter 382, AC disconnect 304, etc.) to route power to one or more components of the air conditioning system, such as the first unit 200, the second unit(s) 250, along with the indoor load(s) 270, and any other loads.

FIG. 9 depicts an energy management process in an example embodiment. The process may be performed by the controller 220 and/or by the thermostat 260. At 600, the controller 220 determines if a request for a reduction in energy usage is present, or any other communication signal, such as a change in energy pricing, or an incentive. The utility provider may request a reduction in energy usage during a certain period of time to avoid a service interpretation (e.g., a brownout), or other penalty or incentive such as a change in pricing. The request for a reduction in energy usage may be accompanied by an incentive (e.g., $5 off next energy bill). The request for reduction may also originate from an energy consumer, such as a data center, where the data center needs to maintain their processing and/or cooling loads and incentivizes other users to decrease their consumption to ensure energy availability.

If a request for a reduction in energy usage is present, flow proceeds to 602 where a user (e.g., a customer of the utility) can approve or deny the request to reduce energy usage. The approve or deny determination may be pre-established by the user and pre-programmed into the controller 220 and/or the thermostat 260. For example, the user may wish to always reduce energy consumption, regardless of the terms. The user may wish to never reduce energy consumption, regardless of the terms. The user may wish to reduce energy consumption only if the utility offers an incentive. The approve or deny determination at 602 may also be in real time, where the user enters an approval or denial of reduced energy consumption through the thermostat 260 or through a mobile device.

If the user approves reduced energy usage at 602, flow proceeds to 604 where one or more components of the air conditioning system (if needed), and/or other loads, are powered, at least in part, by the energy storage device 240. This may entail opening the AC disconnect 304 (e.g., power from the AC power grid 302 is zero) and powering one or more components of the air conditioning system and/or other loads, using only the energy storage device 240. Operating one or more components of the air conditioning system and/or other loads may also include using both the AC power grid 302 and the energy storage device 240, in conjunction, to power the one or more components of the air conditioning system and/or other loads. The controller 220 can limit the amount of power drawn from the AC power grid 302 by controlling the various power converters 230 in the system (e.g., AC/AC converter 310, AC/DC converter 312, DC/AC converter 347, DC/DC converter 320, DC/DC converter 316, DC/DC converter 241, AC/DC converter 370, DC/AC converter 372, AC/DC converter 380 and/or multilevel inverter 382) to reduce the amount of AC power drawn from the AC power grid 302. The energy storage device 240 and the AC power grid 302 are used in conjunction to power one or more components of the air conditioning system and/or one or more loads.

Operating the one or more components of the air conditioning system using the energy storage device 240 may also include limiting the amount of power used from the AC power grid 302 to a power limit (e.g., 1 kW during 2 hours). The controller 220 can limit the amount of power drawn from the AC power grid 302 by controlling the various power converters 230 in the system (e.g., AC/AC converter 310, AC/DC converter 312, DC/AC converter 347, DC/DC converter 320, DC/DC converter 316, DC/DC converter 241, AC/DC converter 370, DC/AC converter 372, AC/DC converter 380 and/or multilevel inverter 382) to reduce the amount of AC power drawn from the AC power grid 302. At 604, other loads may be powered by the energy storage device 240, including indoor load(s) 270, which may include indoor DC load(s) 318 and/or indoor AC load(s) 308. The process returns to 600.

At some point, the energy storage device 240 will lack sufficient charge such that the one or more components of the air conditioning system will need to be powered exclusively by the AC power grid 302. The controller 220 can detect when a status, such as state of charge (SOC), state of health (SoH), voltage, temperature, etc., of the energy storage device 240 is not within acceptable limits to power the one or more components of the air conditioning system or other loads. If the status of the energy storage device 240 is not within acceptable limits, the one or more components of the air conditioning system and/or other loads need to be powered by the AC power grid 302. This results in discontinuing discharging the energy storage 240 and/or initiating charging the energy storage device 240.

If the utility, or some other source, has not requested to reduce the energy usage at 600, flow proceeds to 606 where the controller 220 determines if the system 100 should use power from the energy storage device 240. One example of a situation where the system 100 should use power from the energy storage device 240 occurs when the utility power is at least one of at a peak price, approaching a grid capacity or at the grid capacity. This determination may be made in real time or may be made previously using forecasting and communicated to the air conditioning system from the utility. Peak price does not necessarily require that the price for electricity be at a maximum, but is generally known in the art as a period of higher than average energy costs. Whether the utility is at a peak price may be determined by utility pricing obtained from the remote system 410 or current or future weather information obtained from the remote system 410. This information may also be locally stored at controller 220. If the utility is at least one of at a peak price, approaching a grid capacity or at the grid capacity, flow proceeds to 604 where the one or more components of the air conditioning system and loads 270, including indoor AC loads 308 and/or other loads are powered by the energy storage device 240 alone or in conjunction with the AC power grid 302. The controller 220 can limit the amount of power drawn from the AC power grid 302 by controlling the various power converters 230 in the system, as noted above. The utility power at a peak price and grid capacity are not the only factors that may be relied on in determining that the system should use power from the energy storage device 240.

With respect to grid capacity, information regarding the grid capacity and current grid load can be obtained from a remote system, such as the source of the utility pricing. If the AC power grid 302 is at grid capacity or approaching grid capacity (e.g., within a threshold range of grid capacity and, optionally, increasing), then it may be prudent to use power from the energy storage device 240 to avoid a power disruption.

Another example of a situation where the system should use power from the energy storage device 240 occurs when a user requests reduced energy usage. The user may use the thermostat 260 to place the system 100 in reduced energy usage mode (e.g., eco-friendly mode) which causes the system to use power from the energy storage device 240 to power one or more components of the air conditioning system.

In another example, the system may use power from the energy storage device 240 based on machine learning (ML) and/or artificial intelligence (AI) control algorithms implemented by controller 220 based on data from block 602 (e.g., User agree), or based on data from block 600 (e.g., Request reduced energy usage).

If at 606, the system should not use power from the energy storage device 240, flow proceeds to 608 where the energy storage device 240 is charged using the AC power grid 302. At 610, the controller 220 determines if the battery status is within acceptable limits, including state of charge (SOC), state of health (SoH), temperature, voltage, or status beyond safety and/or operational limits. If yes, flow returns to 600. At 610, the controller 220 can detect parameters of the energy storage device 240, to confirm that parameters such as state of health of the battery, operating range, temperature range, voltages, capacity, etc., are within the valid limits.

It should be noted that the energy storage device 240 may be charged even if the utility power is at a peak price. This may include failure modes, test modes, etc. Thus, charging the energy storage device 240 is not limited to off-peak utility power price times.

If at 610, the energy storage device has a status that is not within acceptable limits, flow proceeds to 612 where the energy storage device 240 may be charged if the SoC is low or may be disconnected completely if the energy storage device 240 is not operating per safety and/or operational limits.

While FIG. 9 refers to operating one or more components of the air conditioning system and/or other loads to reduce power consumption, other techniques may be used to reduce power consumption, such as using a variable speed drive to reduce compressor speed, changing a thermostat set-point, etc. In other embodiments, the utility could request an increase in energy usage. This request can be a real-time or a future request based on predicted conditions. Increasing energy usage may include charging the energy storage device 240.

One or more operations of the process of FIG. 9 may be performed by the thermostat 260, if the thermostat 260 is equipped with a processor 261. The processor 261 may be implemented using a general-purpose microprocessor executing a computer program stored on a storage medium to perform the operations described herein. Alternatively, the processor 261 may be implemented in hardware (e.g., ASIC, FPGA) or in a combination of hardware/software. The controller 220 and thermostat may perform all or some of the operations of FIG. 9, in conjunction or individually.

In other embodiments, the controller 220 and/or the thermostat 260 executes a system enhancement routine to improve performance of the entire air conditioning system, based on optimization (including model predictive controls) or machine learning techniques, considering carbon impact, energy performance, energy cost, lifecycle cost, lifetime impact on equipment, reliability. The system enhancement routine may operate with or without use of information regarding weather, occupancy, historical usage, customer preferences, equipment performance maps (HVAC, battery), potential for energy outages etc. Machine learning techniques on customer preferences, usage, elasticity of decisions regarding temperature, cost, environmental issues, etc. could be used to improve controls logic, and optimization. Other control strategies such as pre-cooling and preheating, that have an advantage on cost, performance, efficiency, environment, comfort, reliability, may be implemented by the controller 220 and/or the thermostat 260.

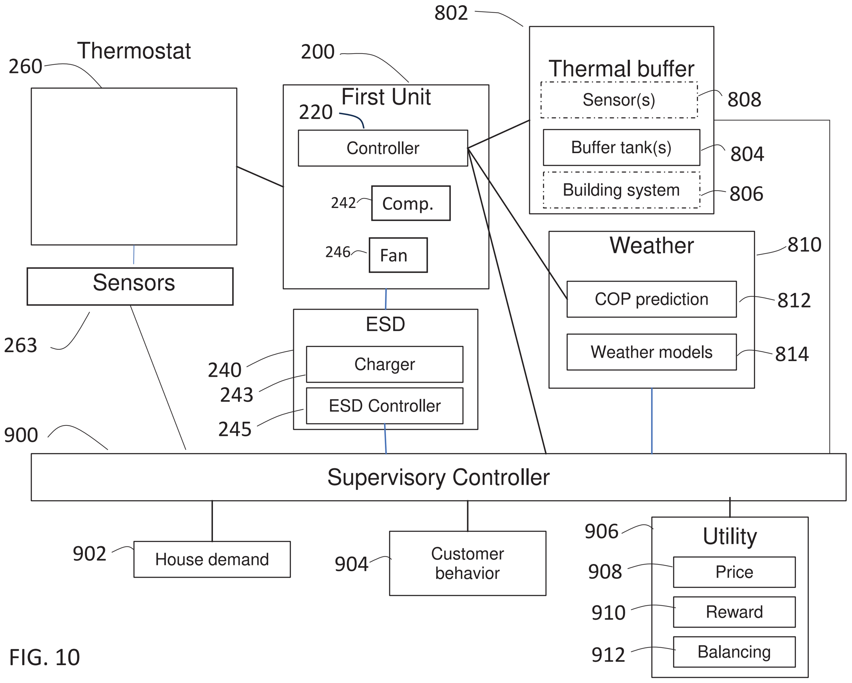

FIG. 10 depicts a system architecture in an example embodiment. Some components of FIG. 10 correspond to components in FIGs. 1-8, and common reference numerals are used to identify similar components. The system provides air conditioning to a building, such as building 102 in FIG. 1. Not all components of the system are depicted in FIG. 10. It is understood that elements from FIGs. 1-8 may be incorporated in the system of FIG. 10 to enable providing power to the air conditioning system.

The system includes a thermostat 260 that interfaces with the air conditioning system, allowing users to input operational modes, setpoints for various zones, occupancy schedules, setpoint schedules, etc. The thermostat 260 communicates with a controller 220 of a first unit 200 (e.g., an outdoor unit) to relay user settings. One or more sensors 263 (e.g., zone sensors in the building) communicate with the thermostat 260 and the controller 220 of the first unit 200 and provide environmental conditions (e.g., indoor temperature, indoor humidity, indoor air quality, etc.) inside the building serviced by the air conditioning system. These sensors 263 provide real-time data to the controller 220, which uses this information to adjust the operation of the air conditioning system. The thermostat 260 may also provide past performance information to the controller 220, enabling more precise control of the system.

The first unit 200 includes elements such as the compressor 242, the fan 246, and other associated components (e.g., heat exchanger). The first unit 200 interacts with the controller 220 to regulate the cooling and heating processes based on the data received from the sensors 263 and the thermostat 260. The controller 220 may serve as a central processing unit of the air conditioning system, responsible for managing the operation of various components. The controller 220 receives input from the thermostat 260, sensors 263, and other external data sources. The controller 220 processes this information to control the compressor 242, fan 246, and other elements within the first unit 200, ensuring efficient and effective operation.

An electrical energy storage device 240 stores electrical energy for use during peak demand periods or when grid power is unavailable. The energy storage device 240 is managed by an energy storage device controller 245, which communicates with the controller 220 to determine the optimal times for charging and discharging the energy storage device 240. An energy storage device charger 243 (e.g., AD/DC or DC/DC) facilitates the charging process of the energy storage device 240, ensuring the energy storage device 240 is ready to supply power when needed.

The energy storage device controller 245 oversees the operation of the energy storage device 240, including charging, discharging, monitoring voltage, monitoring state of charge, monitoring state of health, etc. The energy storage device controller 245 communicates with the controller 220 to coordinate charging/discharging of the energy storage device 240 based on system demands and external factors, such as utility prices and weather conditions.

The system includes a thermal buffer 802 that stores thermal energy, which can be used to meet the heating and cooling demands of a building. The thermal buffer 802 may include one or more sensor(s) 808. At least one sensor 808 may provide a temperature of the thermal buffer 802 to the controller 220, to manage the storage and release of thermal energy to and from the thermal buffer 802.

The thermal buffer 802 may include one or more buffer tanks 804 that serve as additional thermal storage units, holding thermal energy in the form of heated or cooled fluid. The one or more buffer tanks 804 are managed by the controller 220. The controller 220 determines the optimal times for charging and discharging (e.g., cooling or heating the fluid) the stored thermal energy based on system demands and external conditions. The one or more buffer tanks 804 may be connected to the first unit 200 by piping, that can carry liquid from the one or more buffer tanks 804 to the first unit 200. The fluid from the one or more buffer tanks 804 performs heat exchange with one or more components of the first unit 200 (e.g., a heat exchanger that can operate as a condenser or evaporator). For example, to improve operation of a condenser in the first unit 200, cool water from the one or more buffer tanks 804 is pumped to the first unit 200 to improve condenser performance.

The thermal buffer 802 may include a building system 806 that encompasses the infrastructure of the building, including the air conditioning system, air mass of the building, thermal mass of the building, water present in pipes in the building, etc. The one or more sensor(s) 808 may include a temperature sensor providing temperature of various infrastructure of the building.

Weather data 810 provides real-time and forecasted weather information to the controller 220. The weather data 810 is used to predict heating and cooling demands of the building. The weather data 810 may be provided by a remote system, such as remote system 410 in FIG. 8.

A coefficient of performance (COP) module 812 calculates the COP of the air conditioning system based on current and forecasted weather conditions. The COP prediction module 812 may be based on the type of air conditioning system, the manufacturer and model of the air conditioning system, past COP of the air conditioning system, etc. The COP prediction module 812 may be implemented by the controller 220, a supervisory controller 900, or other processor-based computing system.

A weather model 814 provides detailed weather forecasts and simulations, providing data to the controller 220. The weather model 814 may be provided by a remote system, such as remote system 410 in FIG. 8. The weather model 814 helps predict future heating and cooling demands, enabling the air conditioning system to adjust the operation accordingly.

A supervisory controller 900 provides high-level management of the entire air conditioning system. The supervisory controller 900 may be implemented by the controller 220 or a separate controller (e.g., having a processor, communications unit, memory, etc.). The supervisory controller 900 may be implemented by any processor-based computation or computer device capable of performing the functions described herein, including, without limitation, a computer, a server, a workstation, a desktop computer, a laptop computer, a notebook computer, a tablet computer, a mobile computing device, a wearable computing device, a network appliance, a web appliance, a distributed computing system (e.g., cloud computing), a processor-based system, and/or a consumer electronic device.

The supervisory controller 900 communicates with the thermostat 260, the sensors 263, the controller 220, the thermal buffer 802, the energy storage device controller 245 and the weather data 810. The supervisory controller 900 also receives data corresponding to house demand 902, customer behavior 904 and utility information 906. This communication may be performed over wireless (e.g., Bluetooth, WiFi, Zigbee, etc.) and/or wired (e.g., CANbus, MODbus, LAN, four wire, etc.) communication paths.

The house demand data 902 represents the overall energy requirements of the building, including heating and cooling. The house demand data 902 may include predicted future energy requirements of the building. The house demand data 902 is used by the supervisory controller 900 and/or the controller 220 to adjust the operation of the air conditioning system to meet these demands efficiently and to predict future operations.

The customer behavior data 904 tracks and predicts the occupant usage patterns and preferences, such as occupancy, setpoints, rewards preference, etc. This data is used by the supervisory controller 900 and/or the controller 220 to adjust operation of the air conditioning system to enhance both comfort and efficiency.

The utility data 906 represents information from the utility, which refers to one or more entities involved in the generation, transmission and/or distribution of electrical power on the AC power grid. The utility data 906 is used by the supervisory controller 900 and/or the controller 220 to make informed decisions about energy usage and storage.

The utility data 906 includes price data 908 that provides real-time and/or forecasted electricity pricing information to the controller 220 and/or the supervisory controller 900. The price data 908 is used to optimize system operation, reducing costs by adjusting energy usage based on price fluctuations.

The utility data 906 includes reward data 910, that tracks and manages incentives offered by the utility provider for reducing energy consumption, for example, during peak energy cost periods. The reward data 910 is used by the controller 220 and/or the supervisory controller 900 to adjust system operation to take advantage of these incentives.

The utility data 906 includes balancing data 912 that ensures that the energy usage of the air conditioning system is balanced with the available supply from the AC power grid. The balancing 912 data is used by the controller 220 and/or the supervisory controller 900 to maintain system stability and efficiency. The utility data 906 may also include information of future/predicted grid outage events or times where no energy will be provided for air conditioning use cases.

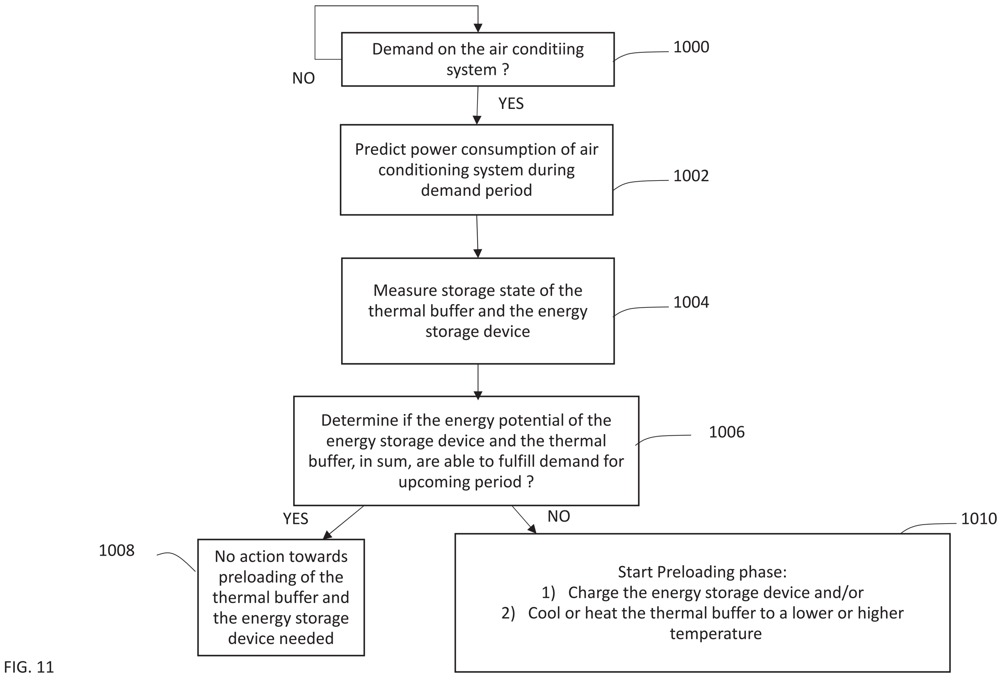

FIG. 11 shows a method for managing the energy consumption of an air conditioning system. The method can be implemented by the controller 220 and/or the supervisory controller 900, acting individually or in concert.

At block 1000, it is determined if there is a demand on the air conditioning system, such as a demand for heating or cooling. This operation may involve the thermostat 260 sending a command for cooling or heating to the controller 220 and/or the supervisory controller 900. The demand may be a current demand/or a predicted future demand. The demand may be associated with a time frame (e.g. 2 hours) represented by a demand period.

At block 1002, power consumption of the air conditioning system for the demand period is predicted. This prediction is based on several factors, including, for example, the average power consumption of the air conditioning system in one or more prior demand periods, customer behaviors (e.g., occupancy schedule), weather forecasts and the actual thermal condition of the building. The power consumption of the air conditioning system for the upcoming demand period may be predicted using an average of power consumption over several days.

As the thermal buffer 802 may be the building itself, in case of air-to-air air conditioning systems, the thermal energy storage in the building itself will include a pre-estimated amount of thermal energy that can be stored in the building system. The system learns how much energy is consumed by the air conditioning system to maintain a certain temperature level, for various outside conditions, and pre-estimates the thermal capacity of the demand of the building.

At block 1004, the storage state of both the thermal buffer 802 and the energy storage device 240 is measured. This operation involves checking the current energy levels stored in the thermal buffer 802 and the energy storage device 240 to determine availability of energy for meeting the upcoming demand on the air conditioning system.

At block 1006, it is determined if the combined electrical energy potential of the energy storage device 240 and thermal energy potential of the thermal buffer 802 is sufficient to fulfill the air conditioning system demand for the upcoming demand period. This determination at 1006 may include considering a coefficient of performance (COP) prediction, which indicates the efficiency of the air conditioning system in converting energy input into an output (e.g., heating or cooling the building).

If at 1006, the combined electrical energy potential of the energy storage device 240 and thermal energy potential of the thermal buffer 802 is determined to be sufficient to fulfill the air conditioning system demand for the upcoming demand period, flow proceeds to block 1008. At block 1008, it is concluded that no action towards preloading of the thermal buffer 802 and/or the energy storage device 240 is needed. The system continues to operate normally without any additional energy storage actions.

If at 1006, the combined electrical energy potential of the energy storage device 240 and thermal energy potential of the thermal buffer 802 is determined to be insufficient to fulfill the air conditioning system demand for the upcoming demand period, flow proceeds to block 1010. At block 1010, a preloading phase is initiated. During the preloading phase, the energy storage device 240 is charged, for example, to a maximum possible capacity or upper threshold. The thermal buffer 802 is cooled to a lower temperature or heated to a higher temperature by using the air conditioning system.

The thermal buffer 802 may have its temperature adjusted to a preload setpoint. The thermal buffer in the system has a temperature setpoint Ts that may be dependent on one or more of the demand of the building, thermostat settings and customer preferences. If a demand event occurs where the air conditioning system is not available, or is insufficient due to utility events, the system needs to store more thermal energy in the thermal buffer 802, in the form of a higher or a lower temperature, before this demand event starts. This allows the system to be able to fulfill the demand of the system at any given time which means the temperature of the thermal buffer 802 system shall not be higher (cooling) or lower (heating) than the setpoint Ts at the end of the demand period.

Therefore, a second buffer setpoint (e.g., a preloading setpoint) is calculated and the thermal buffer 802 heated or cooled, as necessary, so that the fluid of the thermal buffer 802 equals the preloading setpoint. The thermal buffer 802 needs to reach the preload setpoint, $T_{S,0}$, before the demand period starts as represented by the equations below.

$$T_{S,0} = T_S + \Delta T$$

with

$$\Delta T = Q_{th,\,calc} / (m_{buffer} * c_P)$$

where

$T_S$ is a demand-driven temperature setpoint;

$T_{S,0}$ is a preloading setpoint;

$\Delta T$ is a temperature difference to store extra energy in the thermal buffer 802 needed for the demand period;

$Q_{th,\,calc}$ is thermal energy transferred during demand period (e.g., a negative value in the case of cooling);

$m_{buffer}$ is a thermal mass of thermal buffer 802; and

$C_P$ is a specific heat capacity of fluid in thermal buffer 802.

The preload setpoint of the thermal buffer 802 is established to meet a target temperature in the building conditioned by the air conditioning system at the end of the upcoming demand period.

This preloading ensures that sufficient stored energy, in the energy storage device 240 and/or the thermal buffer 802, is available to meet the upcoming demand period. This preloading may be controlled in response to various factors, including weather, customer behavior, price of electricity on the AC power grid and predicted power consumption of the air conditioning system during the demand period.

The preloading phase at 1010 may consider availability of electricity on the AC power grid, currently or in the future. For example, the utility may issue a notification of an upcoming period of time in which the AC power grid will be unavailable. Based on parameters such as COP of the air conditioning system, current building temperature, ambient temperature, learned thermal performance of the building (e.g., how the building retains temperature), occupancy, thermostat setpoint, etc., the system determines a selected preloading phase, in order to satisfy user comfort and reduce (e.g., minimize) costs and/or CO2 footprint.

Embodiments allow the air conditioning system to be powered based on a variety of factors. For example, weather conditions can affect how the air conditioning system is powered (e.g., if the sun is shining e.g. the heat pump should not run; the electrical energy from the battery can be used). Behavior and/or comfort of the user can affect how the air conditioning system is powered (e.g., use energy from photovoltaic sources to heat/cool the building more than it is required at a time where the battery is not charged). Price data 908 can affect how the air conditioning system is powered (e.g., when electrical utility prices are low, run the air conditioning system from the AC power grid, if the state of charge of the battery is satisfactory). Determining how the air conditioning system is powered may happen independently of the state of charge of the energy storage device 240 and/or the thermal buffer 802.

The system of FIG. 10 allows for a variety of energy management techniques. In one embodiment, a temperature-tolerance may be added to a customer set-

point, upon customer approval, when running the air conditioning system (e.g., +-1.5°C). The energy storage device 240 may always be charged to a full charge, rather than to a predicted energy demand.

In other embodiments, electrical prices and demand for charging the energy storage device 240 are compared. In some cases, it may be cheaper to power the air conditioning system from the AC power grid, rather than charge the energy storage device 240.

Embodiments may be used with different system architectures such as air to water heat pumps, ground source heat pumps, air conditioning systems with a buffer tank (e.g., liquid), and air conditioning systems that do not include dedicated buffer tank.

Embodiments leverage the use of a thermal buffer 802 to augment an energy storage device 240 and/or the AC power grid 302. The system is more adapted to realistic behavior and efficiency is enhanced. Therefore, the system can be operated in a more effective and cost-sensitive way. The system enables extra energy storing (e.g., in thermal buffer 802) that enables the option for less battery capacity needed. Additionally, a dedicated thermal energy storage has much lower cost in €/kWh than typical battery systems.

As described above, embodiments can be in the form of processor-implemented processes and devices for practicing those processes, such as the controller 220 and/or the thermostat 260 and/or the supervisory controller 900. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes a device for practicing the embodiments. When implemented on a general-purpose microprocessor, the computer program code segments configure the microprocessor to create specific logic circuits.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present invention is not thus limited. Rather, the present invention can be modified to incorporate any number of variations, alterations, substitutions, combinations, sub-combinations, or equivalent arrangements not heretofore described, but which are commensurate with the scope of the present invention as set out in the appended claims. Additionally, while various embodiments of the present invention have been described, it is to be understood that aspects of the present invention may include only some of the described embodiments. Accordingly, the present invention is not to be seen as limited by the foregoing description, but is only limited by the scope of the appended claims.

## Claims

1. A method of operating an air conditioning system (100) including an electrical energy storage device (240) and a thermal buffer (802), the method comprising:

   predicting (1002) power consumption of the air conditioning system during an upcoming demand period;
   measuring (1004) a storage state of the electrical energy storage device and a storage state of the thermal buffer;
   determining (1006) if a combined electrical energy from the electrical energy storage device and thermal energy from the thermal buffer is sufficient to fulfill the predicted power consumption of the air conditioning system for the upcoming demand period;
   in response to the combined electrical energy from the electrical energy storage device and thermal energy from the thermal buffer being insufficient to fulfill the predicted power consumption of the air conditioning system for the upcoming demand period, starting (1010) a preloading phase;
   wherein the preloading phase includes at least one of (i) charging the electrical energy storage device or (ii) heating or cooling the thermal buffer using the air conditioning system.

2. The method of operating the air conditioning system (100) of claim 1, wherein the thermal buffer (802) comprises one or more buffer tanks (804) storing a liquid.

3. The method of operating the air conditioning system (100) of claim 1, wherein the thermal buffer (802) comprises a building (806).

4. The method of operating the air conditioning system (100) of any preceding claim, wherein the predicting (1002) the power consumption of the air conditioning system during the upcoming demand period includes predicting the power consumption in response to weather data (810).

5. The method of operating the air conditioning system (100) of claim 4, wherein the weather data (810) includes a predicted coefficient of performance of the air conditioning system,
and/or, wherein the weather data includes a weather model (814).

6. The method of operating the air conditioning system (100) of any preceding claim, further comprising adjusting operation of the air conditioning system in response to house demand data (902).

7. The method of operating the air conditioning system (100) of any preceding claim, further comprising adjusting operation of the air conditioning system in response to customer behavior data (904).

8. The method of operating the air conditioning system (100) of any preceding claim, further comprising adjusting operation of the air conditioning system in response to utility data (906).

9. The method of operating the air conditioning system (100) of claim 8, wherein the utility data (906) includes price data (908) that provides real-time and/or forecasted electricity pricing information.

10. The method of operating the air conditioning system (100) of any of claims 8 or 9, wherein the utility data (906) includes reward data (910) that tracks and manages incentives offered by a utility provider for reducing energy consumption.

11. The method of operating the air conditioning system (100) of any of claims 8 to 10, wherein the utility data (906) includes balancing data (912) that ensures that energy usage of the air conditioning system is balanced with available supply from an AC power grid.

12. The method of operating the air conditioning system (100) of any preceding claim, wherein the preloading phase includes determining a selected preloading phase, in order to satisfy user comfort, reduce CO2 emissions and/or reduces costs in response to coefficient of performance of the air conditioning system, current building temperature, ambient temperature, learned thermal performance of the building, occupancy and thermostat setpoint.

13. The method of operating the air conditioning system (100) of any preceding claim, wherein the heating or cooling of the thermal buffer (802) using the air conditioning system includes calculating a preload setpoint for the thermal buffer to meet a target temperature in a building conditioned by the air conditioning system at the end of a demand period.

14. An air conditioning system (100) comprising:

a first unit (200) having a compressor (242) and at least one fan (246);
a second unit (250) in fluidly coupled to the first unit;
an electrical energy storage device (240);
a thermal buffer (802);
a controller (220) in communication with the first unit, the controller configured to execute operations including:

predicting power consumption of the air conditioning system during an upcoming demand period;
measuring a storage state of the electrical energy storage device and a storage state of the thermal buffer;
determining if a combined electrical energy from the electrical energy storage device and thermal energy from the thermal buffer is sufficient to fulfill the predicted power consumption of the air conditioning system for the upcoming demand period;
in response to the combined electrical energy from the electrical energy storage device and thermal energy from the thermal buffer being insufficient to fulfill the predicted power consumption of the air conditioning system for the upcoming demand period, starting a preloading phase;

wherein the preloading phase includes at least one of (i) charging the electrical energy storage device or (ii) heating or cooling the thermal buffer using the air conditioning system.

15. A computer program embodied on a non-transitory computer-readable storage medium, the computer program including instructions for causing a processor (224) to implement a process for operating an air conditioning system (100) including an electrical energy storage device (240) and a thermal buffer (802), the process comprising:

predicting (1002) power consumption of the air conditioning system during an upcoming demand period;
measuring (1004) a storage state of the electrical energy storage device and a storage state of the thermal buffer;

determining (1006) if a combined electrical energy from the electrical energy storage device and thermal energy from the thermal buffer is sufficient to fulfill the predicted power consumption of the air conditioning system for the upcoming demand period;

in response to the combined electrical energy from the electrical energy storage device and thermal energy from the thermal buffer being insufficient to fulfill the predicted power consumption of the air conditioning system for the upcoming demand period, starting (1010) a preloading phase;

wherein the preloading phase includes at least one of (i) charging the electrical energy storage device or (ii) heating or cooling the thermal buffer using the air conditioning system.

EP 4 722 610 A1

AC grid

100

102

AC and/or DC

200

250

250

250

230

AC

Power
converter

242 — Comp.

244 — Drive

246 — Fan

248 — loads

DC

240

ESD

Thermostat — 260

Controller — 220

Loads — 270

FIG. 1

EP 4 722 610 A1

220

| | |
|---|---|
| 222 — Sensor interface | memory — 226 |
| 224 — processor | Communication unit — 228 |

FIG. 2

FIG. 3A

FIG. 3B

EP 4 722 610 A1

FIG. 4A

EP 4 722 610 A1

FIG. 4B

EP 4 722 610 A1

FIG. 5A

DC Architecture

FIG. 5B

AC Architecture

DC Architecture

220
Controller

230

302
AC

304

305

370
AC/DC

371

372
DC/AC

200

Other loads 248

242
Comp.

Drive

244A

FIG. 5C

241
DC/DC

240
ESD

302
AC

304

305

200

Other loads 248

242
Comp.

Drive

244A

220
Controller

370
AC/DC

241
DC/DC

240
ESD

FIG. 5D

230

AC Architecture

EP 4 722 610 A1

FIG. 6

EP 4 722 610 A1

FIG. 7

Utility pricing

Weather

410

406

Network

220 Controller

Thermostat 260

400

Processor

261

FIG. 8

EP 4 722 610 A1

FIG. 9

600 Request reduced energy usage?
602 User agree?
604 Power air conditioning system (and/or other loads) at least partially by ESD
606 Use ESD power?
608 Charge ESD
610 ESD status within limits?
612 Charge ESD or other action

FIG. 10

33

```
         ┌──────────────────────────┐
         │  Demand on the air conditiing  │────── 1000
    NO   │         system ?          │
 ┌───────┤                          │
 │       └──────────────────────────┘
 │              │ YES
 │              ▼
 │       ┌──────────────────────────┐
 │       │ Predict power consumption of air │
 │       │  conditioning system during  │────── 1002
 │       │       demand period       │
 │       └──────────────────────────┘
 │              │
 │              ▼
 │       ┌──────────────────────────┐
 │       │  Measure storage state of the │
 │       │  thermal buffer and the energy │────── 1004
 │       │       storage device      │
 │       └──────────────────────────┘
 │              │
 │              ▼
 │       ┌──────────────────────────┐
 │       │ Determine if the energy potential of the │
 │       │ energy storage device and the thermal │────── 1006
 │       │ buffer, in sum, are able to fulfill demand for │
 │       │       upcoming period ?       │
 │       └──────────────────────────┘
 │         YES ╱          ╲ NO
 │            ╱            ╲
```

| 1008 | No action towards preloading of the thermal buffer and the energy storage device needed | Start Preloading phase:<br>1) Charge the energy storage device and/or<br>2) Cool or heat the thermal buffer to a lower or higher temperature | 1010 |

FIG. 11

# EP 4 722 610 A1

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 222 083 B2 (JOHNSON CONTROLS TECH CO [US]) 5 March 2019 (2019-03-05) * column 6 - column 109; claims 1-18; figures 1-16 * | 1-15 | INV. F24F11/46 F24F11/47 F24F11/64 F24F140/50 F24F140/60 |
| A | EP 3 358 426 A1 (JOHNSON CONTROLS TECH CO [US]) 8 August 2018 (2018-08-08) * paragraph [0028] - paragraph [0280]; claims 1-15; figures 1-16 * | 1-15 | |
| A | JP 2012 210151 A (SHIMIZU CONSTRUCTION CO LTD) 25 October 2012 (2012-10-25) * paragraph [0022] - paragraph [0105]; claims 1-7; figures 1-20 * | 1-15 | |
| A | US 11 709 509 B2 (ALARM COM INC [US]) 25 July 2023 (2023-07-25) * paragraph [0003] - paragraph [0037]; claims 1-15 * | 1-15 | |

TECHNICAL FIELDS SEARCHED (IPC)

F24F

The present search report has been drawn up for all claims

| Place of search | Date of completion of the search | Examiner |
|---|---|---|
| Munich | 3 February 2026 | Silex, Anna |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...............................................................................
& : member of the same patent family, corresponding
    document

EPO FORM 1503 03.82 (P04C01)

## EP 4 722 610 A1

### ANNEX TO THE EUROPEAN SEARCH REPORT
### ON EUROPEAN PATENT APPLICATION NO.

EP 25 20 6166

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2026

| Patent document cited in search report | | Publication date | Patent family member(s) | | Publication date |
|---|---|---|---|---|---|
| US 10222083 | B2 | 05-03-2019 | AU | 2016334359 A1 | 31-08-2017 |
| | | | AU | 2016334372 A1 | 15-03-2018 |
| | | | EP | 3245707 A1 | 22-11-2017 |
| | | | EP | 3360223 A1 | 15-08-2018 |
| | | | US | 2016377306 A1 | 29-12-2016 |
| | | | US | 2017104346 A1 | 13-04-2017 |
| | | | US | 2019195526 A1 | 27-06-2019 |
| | | | US | 2019219295 A1 | 18-07-2019 |
| | | | US | 2020318843 A1 | 08-10-2020 |
| | | | US | 2022042704 A1 | 10-02-2022 |
| | | | WO | 2017062896 A1 | 13-04-2017 |
| | | | WO | 2017062911 A1 | 13-04-2017 |
| EP 3358426 | A1 | 08-08-2018 | CN | 108416503 A | 17-08-2018 |
| | | | EP | 3358426 A1 | 08-08-2018 |
| | | | US | 2018224814 A1 | 09-08-2018 |
| JP 2012210151 | A | 25-10-2012 | JP | 5696877 B2 | 08-04-2015 |
| | | | JP | 5822207 B2 | 24-11-2015 |
| | | | JP | 2012080679 A | 19-04-2012 |
| | | | JP | 2012210151 A | 25-10-2012 |
| | | | SG | 179328 A1 | 27-04-2012 |
| | | | US | 2012083927 A1 | 05-04-2012 |
| US 11709509 | B2 | 25-07-2023 | CA | 3210976 A1 | 18-08-2022 |
| | | | US | 2022253078 A1 | 11-08-2022 |
| | | | US | 2023315135 A1 | 05-10-2023 |
| | | | US | 2025068194 A1 | 27-02-2025 |
| | | | WO | 2022174220 A1 | 18-08-2022 |

EPO FORM P0459

For more details about this annex : see Official Journal of the European Patent Office, No. 12/82